# EUROPEAN PATENT APPLICATION

(11) **EP 4 109 827 A1**
(43) Date of publication of application: **28.12.2022**
(21) Application number: 21757699.0
(22) Date of filing: 08.02.2021
(51) Int. Cl.: H04L 12/58, H04L 12/18

(54) **GROUP DISPLAY METHOD AND DEVICE**

(30) Priority: 19.02.2020 CN 202010103296
(71) Applicant: Beijing Dajia Internet Information Technology Co., Ltd., Beijing 100085 (CN)
(72) Inventor: GUO, Shaoze, Beijing 100085 (CN)
(74) Representative: advotec.
(86) International application number: PCT/CN2021/076053
(87) International publication number: WO 2021/164619

(57) **Abstract**

Disclosed in the present application are a group display method and device. The method comprises: in response to a group display operation triggered by a user account, obtaining a candidate group set to be displayed; obtaining, according to group attribute information of each candidate group in the candidate group set, a group recommendation index corresponding to the candidate group, the group attribute information comprising at least a group establishment time and a group flow parameter of the candidate group; and selecting, according to the group recommendation indexes, a target group from the set of candidate groups for display. Thus, during group display, a target group having a high group activity level is selected from a candidate group set for display according to group recommendation indexes that can reflect group activity levels, so that a user can join the target group according to the user's own social needs, and can achieve effective social interaction by means of the group to meet the user's own social needs.

## Description

### CROSS-REFERENCE TO RELATED APPLICATION

The disclosure claims priority to Chinese Patent Application No. 202010103296.5 filed by BEIJING DAJIA INTERNET INFORMATION TECHNOLOGY CO., LTD. on February 19,2020.

### TECHNICAL FIELD

The disclosure relates to a field of network communication technologies, and particularly to a method and an apparatus for displaying a group.

### BACKGROUND

With the development and popularization of Internet technologies, a user joins in a group through a social application for social services to communicate with a plurality of users, which has been a very common way of online social networking. The users may find a group with a group name satisfying their own social demands to join in, through a group search and recommendation services provided by the social applications.

### SUMMARY

The disclosure provides a method and an apparatus for displaying a group. The technical solution of the disclosure is as follow:
According to some embodiments of the disclosure, a method for displaying a group is provided, and includes: in response to a group display operation triggered by a user account, acquiring a set of candidate groups to be displayed; acquiring a group recommendation index corresponding to each candidate group based on group attribute information of each candidate group in the set of candidate groups; the group attribute information at least includes group setup time and group flow parameters of the candidate group; and selecting a target group from the set of candidate groups for display based on the group recommendation index.

In some embodiments, acquiring a group recommendation index corresponding to each candidate group based on the group attribute information of each candidate group in the set of candidate groups includes: determining a group quality index and a flow distribution index of each candidate group based on the group attribute information of each candidate group in the set of candidate groups; and determining the group recommendation index corresponding to each candidate group based on the group quality index and the flow distribution index of each candidate group.

Therefore, when the group recommendation index corresponding to each candidate group is determined, the group quality index and the flow distribution index of the candidate group are considered, so that the determined group recommendation index is more accurate, which is thus helpful for the following steps. During group display, a target group having a relatively high group activity is selected from the set of candidate groups for display based on the group recommendation index that may reflect the group activity, so that the user may achieve effective social communication by means of a group after joining in the target group based on the user's own social needs, thus meeting the user's own social needs.

In some embodiments, the group flow parameters at least include a flow utilization index and a flow operation index of a corresponding group; determining the flow distribution index of each candidate group based on the group attribute information of each candidate group in the set of candidate groups includes: acquiring a flow support index of each candidate group based on the group setup time of each candidate group and a preset flow support parameter; and taking a sum of the flow utilization index, the flow operation index and the flow support index as the flow distribution index.

In some embodiments, the method further includes acquiring the flow utilization index of each candidate group, including: acquiring a number of applications for joining in a group and a number of group exposures received by each candidate group in a historical statistical period; and acquiring the flow utilization index based on the number of applications for joining in a group and the number of group exposures.

Therefore, the flow distribution index of each candidate group may be exactly determined, which is beneficial to exactly calculating the group recommendation index.

In some embodiments, determining the group quality index of each candidate group based on the group attribute information of each candidate group in the set of candidate groups includes: acquiring at least two of an examination and approval processing rate, a user activity, a group saturation, and a group owner activity of each candidate group based on the group attribute information of each candidate group in the set of candidate groups; and determining the group quality index of each candidate group based on the at least two of the examination and approval processing rate, the user activity, the group saturation, and the group owner activity of each candidate group.

Therefore, when the group quality index of the candidate group is determined, at least two of the examination and approval processing rate, the user activity, the group saturation, and the group owner activity of each candidate group are considered, and the examination and approval processing rate, the user activity, the group saturation, and the group owner activity of each candidate group are acquired based on the group attribute information of the candidate group, the group quality index of the candidate group calculated is thus relatively accurate.

In some embodiments, determining the group quality index of each candidate group based on the at least two of the examination and approval processing rate, the user activity, the group saturation, and the group owner activity of each candidate group includes: acquiring the group quality index by summing up the examination and approval processing rate, the user activity, the group saturation, and the group owner activity of each candidate group processed with corresponding parameter factors.

When the group quality index is determined, the at least two of the examination and approval processing rate, the user activity, the group saturation, and the group owner activity of each candidate group are processed with the corresponding parameter factors and the processed items are summed up, so that the group quality index calculated is accurate, which is beneficial to subsequently accurately calculating a group recommendation index.

In some embodiments, the group attribute information further includes a number of examination and approval processing times, a number of applications for joining in a group, a number of active users, a number of text messages, a number of mutual like messages, a number of applications for joining in a group, an upper limit of a user number in a group, and whether a group owner speaks in a group; acquiring the at least two of the examination and approval processing rate, the user activity, the group saturation, and the group owner activity of each candidate group based on the group attribute information includes at least two of: acquiring the examination and approval processing rate of each candidate group based on the number of examination and approval processing times and the number of applications for joining in a group for each candidate group in the set of candidate groups; or acquiring the user activity of each candidate group based on the number of active users, the number of text messages and the number of mutual like messages; or acquiring the saturation of each candidate group based on the number of applications for joining in a group and the upper limit of a user number in each candidate group; or acquiring the group activity of each candidate group based on whether an owner of each candidate group speaks in a group.

Therefore, the examination and approval processing rate, the user activity, the group saturation, and the group owner activity of the candidate group are accurately calculated based on the group attribute information of the candidate group, and the group quality index may be further accurately acquired based on the at least two of the examination and approval processing rate, the user activity, the group saturation, and the group owner activity.

In some embodiments, acquiring the set of candidate groups to be displayed includes: acquiring a set of groups corresponding to the group display operation as the set of candidate groups; or acquiring a set of groups with a setup duration greater than a preset setup duration as the set of candidate groups; or acquiring a set of groups currently set up in an application corresponding to the user account as the set of candidate groups.

In some embodiments, selecting the target group from the set of candidate groups for display based on the group recommendation index includes: acquiring a candidate group with a group recommendation index greater than a preset recommendation index as a target group for display; or acquiring a candidate group whose group recommendation index has a descending order within a preset descending sorting range as a target group for display.

In some embodiments, each candidate group has a corresponding group category; selecting the target group from the set of candidate groups for display based on the group recommendation index includes: acquiring a sum of group recommendation indexes of candidate groups under each group category based on the group recommendation index of each candidate group as a total group recommendation index under the corresponding group category; and selecting a target group category whose total group recommendation index has a descending order within a preset descending sorting range, and displaying a candidate group having the target group category as the target group.

In some embodiments, displaying the candidate group having the target group category as the target group includes: displaying a set of target groups corresponding to each target group category in sequence based on the descending order of the total group recommendation index of each target group category; and displaying each target group under each target group category in sequence based on the descending order of the group recommendation index.

In some embodiments, triggering a server to acquire and return a set of candidate groups to be displayed by sending a group display request to the server; and/or triggering a server to acquire and return a corresponding group recommendation index based on the group attribute information of each candidate group in the set of candidate groups by sending an acquisition request of a group recommendation index to the server; and/or triggering a server to select and return a target group from the set of candidate groups based on the group recommendation index by sending a target group acquisition request to the server.

According to some embodiments of the disclosure, a method for displaying a group is provided and includes at least one of: in response to receiving a group display request, acquiring and returning a set of candidate groups to be displayed for display of a target group; or in response to receiving an acquisition request of a group recommendation index, acquiring and returning a corresponding group recommendation index based on group attribute information of each candidate group in the set of candidate groups, for display of a target group; or in response to receiving a target group acquisition request, selecting and returning a target group from the set of candidate groups based on the group recommendation index, for display of a target group.

In some embodiments, in response to receiving the acquisition request of the group recommendation index, acquiring the corresponding group recommendation index based on the group attribute information of each candidate group in the set of candidate groups includes: in response to receiving the acquisition request of the group recommendation index, determining a group quality index and a flow distribution index of each candidate group based on the group attribute information of each candidate group in the set of candidate groups; and determining the group recommendation index corresponding to each candidate group based on the group quality index and the flow distribution index of each candidate group.

In some embodiments, the group flow parameters at least include a flow utilization index and a flow operation index of a corresponding group; in response to receiving the acquisition request of the group recommendation index, determining the flow distribution index of each candidate group based on the group attribute information of each candidate group in the set of candidate groups includes: acquiring a flow support index of each candidate group based on the group setup time of each candidate group and a preset flow support parameter; and taking a sum of the flow utilization index, the flow operation index and the flow support index as the flow distribution index.

In some embodiments, the method further includes acquiring the flow utilization index of each candidate group, including: acquiring a number of applications for joining in a group and a number of group exposures received by each candidate group in a historical statistical period; and acquiring the flow utilization index based on the number of applications for joining in a group and the number of group exposures.

In some embodiments, in response to receiving the acquisition request of the group recommendation index, determining the group quality index of each candidate group based on the group attribute information of each candidate group in the set of candidate groups includes: acquiring at least two of an examination and approval processing rate, a user activity, a group saturation, and a group owner activity of each candidate group based on the group attribute information of each candidate group in the set of candidate groups; and determining the group quality index of each candidate group based on the at least two of the examination and approval processing rate, the user activity, the group saturation, and the group owner activity of each candidate group.

In some embodiments, determining the group quality index of each candidate group based on the at least two of the examination and approval processing rate, the user activity, the group saturation, and the group owner activity of each candidate group includes: acquiring the group quality index by summing up the examination and approval processing rate, the user activity, the group saturation, and the group owner activity of each candidate group processed with corresponding parameter factors.

In some embodiments, the group attribute information further includes a number of examination and approval processing times, a number of applications for joining in a group, a number of active users, a number of text messages, a number of mutual like messages, a number of applying for joining in a group, an upper limit of a user number in a group, and whether a group owner speaks in a group; acquiring the at least two of the examination and approval processing rate, the user activity, the group saturation, and the group owner activity of each candidate group based on the group attribute information includes: acquiring the examination and approval processing rate of each candidate group based on the number of examination and approval processing times and the number of applications for joining in a group for each candidate group in the set of candidate groups; or acquiring the user activity of each candidate group based on the number of active users, the number of text messages and the number of mutual like messages; or acquiring the saturation of each candidate group based on the number of applications for joining in a group and the upper limit of a user number in each candidate group; or acquiring the group activity of each candidate group based on whether an owner of each candidate group speaks in a group.

In some embodiments, in response to receiving the group display request, acquiring the set of candidate groups to be displayed includes: acquiring a set of groups corresponding to the group display operation as the set of candidate groups; or acquiring a set of groups with a setup duration greater than a preset setup duration as the set of candidate groups; or acquiring a set of groups currently set up in an application corresponding to the user account as the set of candidate groups.

In some embodiments, selecting the target group from the set of candidate groups based on the group recommendation index includes: acquiring a candidate group with a group recommendation index greater than a preset recommendation index as a target group; or acquiring a candidate group whose group recommendation index has a descending order within a preset descending sorting range as a target group for display.

In some embodiments, each candidate group has a corresponding group category; selecting the target group from the set of candidate groups based on the group recommendation index includes: acquiring a sum of group recommendation indexes of candidate groups under each group category based on the group recommendation index of each candidate group as a total group recommendation index under the corresponding group category; and selecting a target group category whose total group recommendation index has a descending order within a preset descending sorting range, and displaying a candidate group having the target group category as the target group.

According to some embodiments of the disclosure, an apparatus for displaying a group is provided and includes: a set of candidate groups acquiring module, configured to in response to a group display operation triggered by a user account, acquire a set of candidate groups to be displayed; a group recommendation index acquiring module, configured to acquire a group recommendation index corresponding to each candidate group based on group attribute information of each candidate group in the set of candidate groups; the group attribute information at least comprises group setup time and group flow parameters of the candidate group; and a target group display module, configured to select a target group from the set of candidate groups for display based on the group recommendation index.

According to some embodiments of the disclosure, an apparatus for displaying a group is provided, and includes at least one of: a set of candidate groups acquiring module, configured to in response to receiving a group display request, acquire and return a set of candidate groups to be displayed for display of a target group; or a group recommendation index acquiring module, configured to in response to receiving an acquisition request of a group recommendation index, acquire and return a corresponding group recommendation index based on group attribute information of each candidate group in the set of candidate groups, for display of a target group; or a target group acquiring module, configured to in response to receiving a target group acquisition request, select and return a target group from the set of candidate groups based on the group recommendation index, for display of the target group.

According to some embodiments of the disclosure, a terminal is provided and includes: a processor and a memory configured to store instructions executable by the processor. The processor is configured to execute the instructions to implement the method for displaying a group as described in the first aspect.

According to some embodiments of the disclosure, a server is provided and includes: a processor and a memory configured to store instructions executable by the processor. The processor is configured to execute the instructions to implement the method for displaying a group as described in the second aspect.

According to some embodiments of the disclosure, a system for displaying a group is provided, and includes a terminal as described in the fifth aspect and a server as described in the sixth aspect.

According to some embodiments of the disclosure, a storage medium is provided, and when instructions in the storage medium are performed by a processor of a terminal, the terminal is caused to perform the method for displaying a group as described in the first aspect.

According to some embodiments of the disclosure, a storage medium is provided, and when instructions in the storage medium are performed by a processor of a server, the server is caused to perform the method for displaying a group as described in the second aspect.

According to some embodiments of the disclosure, a computer program product including instructions is provided. When the computer program product is run on a computer, the computer is caused to perform a method for displaying a group as described in the first aspect.

According to some embodiments of the disclosure, a computer program product including instructions is provided. When the computer program product is run on the computer, the computer is caused to perform a method for displaying a group as described in the first aspect.

### BRIEF DESCRIPTION OF THE DRAWINGS

The drawings herein are incorporated into the specification and constitute a part of the specification, show embodiments in conformity with embodiments of the present disclosure, and explain the principle of the present disclosure together with the specification, and does not constitute a limitation of the disclosure.
FIG. 1 is a flowchart illustrating a method for displaying a group according to an exemplary embodiment;
FIG. 2 is a flowchart illustrating an implementation at S121 of the embodiment illustrated in FIG. 1;
FIG. 3 is a flowchart illustrating determining a flow distribution index according to an exemplary embodiment;
FIG. 4 is a flowchart illustrating determining a group quality index according to an exemplary embodiment;
FIG. 5 is a block diagram illustrating an apparatus for displaying a group according to an exemplary embodiment;
FIG. 6 is a block diagram illustrating another apparatus for displaying a group according to an exemplary embodiment;
FIG. 7 is a block diagram illustrating another apparatus for displaying a group according to an exemplary embodiment;
FIG. 8 is a block diagram illustrating another apparatus for displaying a group according to an exemplary embodiment.

### DETAILED DESCRIPTION

In order to cause those skilled in the art to better understand the technical solutions of the disclosure, the technical solutions in the embodiments of the disclosure are described clearly and completely below with reference to the accompanying drawings.

It should be noted that the terms "first", "second" and the like in the specification, the claims and the above drawings in the disclosure are used to distinguish similar objects, and need not to be used to describe a specific order or precedence order. It should be understood that the data so used may be interchanged where appropriate, so that the embodiments of the disclosure described herein may be implemented in an order other than illustrated or described herein. The implementations described in the following exemplary embodiments do not represent all implementations consistent with the disclosure. Rather, they are merely examples of apparatuses and methods consistent with some aspects of the present disclosure as detailed in the appended claims. All embodiments of the present disclosure may be performed separately or in combination with other embodiments, which are not limited in the present disclosure.

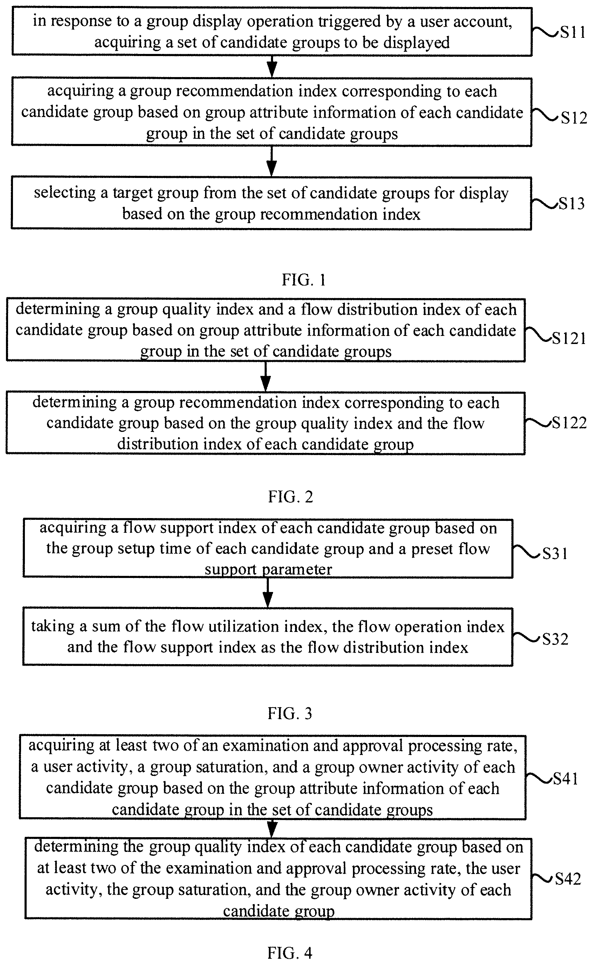

FIG. 1 is a flowchart illustrating a method for displaying a group according to an exemplary embodiment, which is applied to a terminal. The terminal may be a smartphone or a tablet, a computer, etc., which is not limited in embodiments of the disclosure.

As illustrated in FIG. 1, the method may include the following steps at S11-S13.

At S11, in response to a group display operation triggered by a user account, a set of candidate groups to be displayed is acquired.

In some embodiments, there may be various ways in which the user account triggers the group display operation, for example, inputting a search keyword in a group search box and clicking a "nearby groups" button, or clicking a "group recommendation service" button, etc., which is not specifically limited in the embodiments of the present disclosure. After the user account triggers the group display operation, a terminal acquires a set of candidate groups to be displayed in response to the group display operation. In order to describe the solution clearly, the specific implementation at S11 is elaborated in the following embodiments.

At S12, a group recommendation index corresponding to each candidate group is acquired based on group attribute information of each candidate group in the set of candidate groups. The group attribute information at least includes group setup time and group flow parameters of the candidate group.

In some embodiments, each candidate group in the set of candidate groups has group attribute information, and the group attribute information of each candidate group may further include a group identifier, an upper limit of a user number, a current user number, a user activity, a number of text messages, a number of mutual like messages, a number of applying for joining in a group, an upper limit of a user number in a group, and whether a group owner speaks in a group, in addition to the group setup time and the group flow parameters of the candidate group, which is not specifically limited in the embodiment of the disclosure.

The terminal may acquire the group recommendation index corresponding to each candidate group based on group attribute information of each candidate group in the set of candidate groups. In order to describe the solution clearly, the specific implementation at S12 is elaborated in the following embodiments.

At S13, a target group is selected from the set of candidate groups for display based on the group recommendation index.

After determining the group recommendation index, the terminal may select and display a target group from the set of candidate groups the target group based on the group recommendation index. In actual applications, the target group displayed by the terminal is a group favored by a user with a relatively high probability, for example, a candidate group with a group recommendation index greater than a preset recommendation index may be displayed as a target group; the group recommendation indexes of the candidate groups may be sorted in a descending order and a candidate group with the top ranking may be displayed as a target group. In order to describe the solution clearly, the implementation at S13 is elaborated in the following embodiments.

In the technical solution according to the embodiment of the disclosure, in response to the group display operation triggered by the user account, the set of candidate groups to be displayed is acquired, the group recommendation index corresponding to each candidate group is acquired based on the group attribute information such as the group setup time and group flow parameters of each candidate group. During group display, a target group with a high group activity is selected from the set of candidate groups for display based on the group recommendation indexes that may reflect the group activity, so that the user may achieve effective social communication by means of a group after joining in the target group based on the user's own social needs, thus meeting their own social needs.

On the basis of embodiments as illustrated in FIG. 1, acquiring the group recommendation index corresponding to each candidate group based on group attribute information of each candidate group in the set of candidate groups at S12, may include two steps, i.e., the steps at S121 and S122 as illustrated in FIG. 2.

At S121, a group quality index and a flow distribution index of each candidate group are determined based on group attribute information of each candidate group in the set of candidate groups.

The group quality index of each candidate group may be calculated based on the group attribute information of the candidate group. The group quality index may be configured to represent the quality of a candidate group. The higher the group quality index of one candidate group is, which indicates the higher the quality of the candidate group is; and the lower the group quality index of one candidate group is, which indicates the lower the quality of the candidate group is.

In addition, the flow distribution index of each candidate group may also be calculated based on the group attribute information of the candidate group, and the flow distribution indexes may include a flow utilization index and a flow operation index. The higher the flow distribution index of one candidate group, indicating that the higher the flow utilization index and/or the flow operation index of the candidate group is, the lower the flow distribution index of one candidate group is, the lower the flow utilization index and/or the flow operation index of the candidate group.

At S122, a group recommendation index corresponding to each candidate group is determined based on the group quality index and the flow distribution index of each candidate group.

After the group quality index and the flow distribution index of each candidate group are acquired, the group recommendation index corresponding to each candidate group may be calculated. Specifically, the group recommendation index corresponding to the candidate group may be a weighted sum of the group quality index and the flow distribution index of the candidate group, in which the weighting coefficient corresponding to the group quality index and the weighting coefficient corresponding to the flow distribution index may be set based on actual conditions, for example, 0.5, which is not specifically limited in the embodiments of the disclosure.

Therefore, when the group recommendation index corresponding to each candidate group is determined, the group quality index and the flow distribution index of the candidate group are considered, so that the determined group recommendation index is more accurate, which is thus helpful for the following steps. During group display, a target group having a relatively high group activity is selected from the set of candidate groups for display based on the group recommendation index that may reflect the group activity, so that the user may achieve effective social communication by means of a group after joining in the target group based on the user's own social needs, thus meeting the user's own social needs.

On the basis of embodiments as illustrated in FIG. 2, in an implementation, the group flow parameters at least include a flow utilization index and a flow operation index of a corresponding group.

In this case, determining the flow distribution index of each candidate group based on the group attribute information of each candidate group in the set of candidate groups may include the following steps at S31-S32 as illustrated in FIG. 3.

At S31, a flow support index of each candidate group is acquired based on the group setup time of each candidate group and a preset flow support parameter.

In some embodiments, a calculation formula for acquiring the flow support index of each candidate group may be: 30 ^{∗} [(14 - setup days) /14], where 30 and 14 are the preset flow support parameters.

30 and 14 are only an example of the preset flow support parameters. In practical applications, the preset flow support parameters may be set based on the actual conditions, which are not specifically limited in embodiments of the disclosure.

At S32, a sum of the flow utilization index, the flow operation index and the flow support index is taken as a flow distribution index.

In some embodiments, after the flow support index is calculated, the sum of the flow utilization index, the flow operation index and the flow support index may be determined as the flow distribution index. The flow operation index may be a flow support index given by manual operation, and the flow operation index may be set between 0 and 30, which may be set by a manual operator, which is not specifically limited here.

The flow utilization index may be acquired by a terminal. As an implementation of the disclosure, the method for displaying a group further includes: acquiring a flow utilization index of each candidate group, which may include the steps at al and a2.

At a1, a number of applications for joining in a group and a number of group exposures received by each candidate group in a historical statistical period are acquired.

In some embodiments, the historical statistical period may be a day or a week prior to the current moment, which is not specifically limited in embodiments of the disclosure. After the historical statistical period is determined, the number of applications for joining in a group and a number of group exposures received by each candidate group may be acquired in a historical statistical period, and the number of applications for joining in a group may be a number of times of a user applying for joining in a group; the number of group exposures may be a number of times that the group has been recommended.

At a2, a flow utilization index is acquired based on the number of applications for joining in a group and the number of group exposures.

Specifically, a calculation formula of the flow utilization index may be: a number of applications for joining in a group/ a number of group exposures ^{∗} 100, and is not limited here in actual applications, which is not specifically limited in embodiments of the disclosure. It can be seen that, by counting a number of applications for joining in a group and a number of group exposures received by each candidate group in a historical statistical period, a flow utilization index of each candidate group may be accurately calculated, which is further beneficial to accurately calculating the flow distribution index of each candidate group.

It can be seen that, in the technical solution according to the implementation, the flow distribution index of each candidate group may be accurately determined, which is thus helpful to accurately calculate the group recommendation index and the following steps. During group display, a target group having a relatively high group activity is selected from the set of candidate groups for display based on the group recommendation index that may reflect the group activity, so that the user may achieve effective social communication by means of a group after joining in a target group based on the user's own social needs, thus meeting the user's own social needs.

On the basis of the embodiment as illustrated in FIG. 2, in an implementation, determining the group quality index of each candidate group based on the group attribute information of each candidate group in the set of candidate groups may include the following steps at S41-S42 as illustrated in FIG. 4.

At S41, at least two of an examination and approval processing rate, a user activity, a group saturation, and a group owner activity of each candidate group are acquired based on the group attribute information of each candidate group in the set of candidate groups.

In some embodiments, an examination and approval processing rate may be configured to represent the efficiency of processing the applications for joining in the candidate group; a user activity may be configured to represent an activity degree of a user in the candidate group; a group saturation may be configured to represent a number of users joining in a candidate group; and a group activity may be configured to represent whether a group is active in the candidate groups. In order to describe the solution clearly, the implementation at S41 is elaborated in the following embodiments.

At S42, a group quality index of each candidate group is determined based on the at least two of the examination and approval processing rate, the user activity, the group saturation, and the group owner activity of each candidate group.

In some embodiments, after the examination and approval processing rate, the user activity, the group saturation, and the group owner activity of each candidate group are calculated, the group quality index of each candidate group may be determined based on the at least two of them. It may be understood that, the higher the examination and approval processing rate, the higher the group quality index; the higher the user activity, the higher the group quality index; the higher the group owner activity, the higher the group quality index; the higher the group saturation, the lower the group quality index.

It can be seen that, in the technical solution according to the implementation, when the group quality index of the candidate group is determined, at least two of the examination and approval processing rate, the user activity, the group saturation, and the group owner activity of each candidate group are considered, the calculated group quality index of the candidate group is relatively accurate since the examination and approval processing rate, the user activity, the group saturation, and the group owner activity of each candidate group are acquired based on the group attribute information of the candidate group.

On the basis of the embodiment as illustrated in FIG. 4, in an implementation, determining the group quality index of each candidate group based on at least two of the examination and approval processing rate, the user activity, the group saturation, and the group owner activity of each candidate group at S41 may include the step at b2.

At b2, a group quality index is acquired by summing up the examination and approval processing rate, the user activity, the group saturation, and the group owner activity of each candidate group processed with corresponding parameter factors.

In some embodiments, when the group quality index of each candidate group is determined based on four items of the examination and approval processing rate, the user activity, the group saturation, and the group owner activity of each candidate group, a calculation formula of the group quality index may be: 10^{∗}examination and approval processing rate+10-group saturation^{∗} 10+user activity+10^{∗}group activity. The coefficient in the formula is a corresponding parameter factor. It can be seen that the parameter factors corresponding to the examination and approval processing rate, the user activity and the group activity are all positive numbers, while the parameter factor corresponding to the group activity is a negative number. The parameter factors may be set based on the actual situation, which are not specifically limited here.

When the group quality index of each candidate group is determined based on two or three items of the examination and approval processing rate, the user activity, the group saturation, and the group owner activity of each candidate group, it may be reasonable to acquire the group quality index by summing up the processed two or three items with corresponding parameter factors.

It can be seen that, in the technical solution according to the implementation, when the group quality index is determined, the at least two of the examination and approval processing rate, the user activity, the group saturation, and the group owner activity of each candidate group are respectively processed with the corresponding parameter factors and are then summed, so that the calculated group quality index is accurate, which is beneficial to subsequently accurately calculating the group recommendation index.

On the basis of the embodiment as illustrated in FIG. 4, the group attribute information further includes a number of examination and approval processing times, a number of applications for joining in a group, a number of active users, a number of text messages, a number of mutual like messages, a number of applications for joining in a group, an upper limit of a user number in a group, and whether a group owner speaks in a group; acquiring at least two of the examination and approval processing rate, the user activity, the group saturation, and the group owner activity of each candidate group based on the group attribute information at S41 may include at least two of the following steps at c1-c4.

At c1, the examination and approval processing rate of each candidate group is acquired based on the number of examination and approval processing times and the number of applications for joining in a group for each candidate group in the set of candidate groups.

In some embodiments, an examination and approval processing rate of each candidate group may be a ratio of a number of examination and approval processing times to a number of applications for joining in a group. It may be understood that in actual applications, there may be a new group, and the number of applications for joining in the new group may be 0. Therefore, in actual applications, the examination and approval processing rate may be: (number of examination and approval processing times +1)/ (number of applications for joining in a group +1), which may be a possible calculation formula of the examination and approval processing rate, and in practical applications, the calculation formula of the examination and approval rate is not limited here, which is specifically limited in the embodiments of the disclosure.

Alternatively, at c2, the user activity of each candidate group is acquired based on the number of active users of each candidate group, the number of text messages, and the number of mutual like messages.

In some embodiments, the calculation formula of the user activity of the candidate group may be: 20 ^{∗} 1g (10 ^{∗} number of active users +1) +5 ^{∗} Ig {(number of text messages-number of mutual like messages) +1} -10 ^{∗} number of mutual like messages. Since the number of mutual like messages is not an effective text message, the number of the mutual like messages is removed from the in the calculation formula of the user activity, to improve the calculation accuracy of the user activity.

In practical applications, a calculation formula of a user activity is not limited here, which is specifically limited in the embodiments of the disclosure.

Alternatively, at c3, a saturation of each candidate group is acquired based on the number of applications for joining in a group and the upper limit of a user number in each candidate group.

The calculation formula of the candidate group saturation may be a ratio of a number of applications for joining in a group to an upper limit of the user number.

Alternatively, at c4, a group activity of each candidate group is acquired based on whether an owner of each candidate group speaks in a group.

In some embodiments, when the candidate group owner speaks in the candidate group, the group activity of the candidate group is relatively high, and a size of the group activity may be determined based on the number of times the group owner speaks in the candidate group, which is not limited in embodiments of the disclosure.

It can be seen that, in the technical solution according to the embodiment, the examination and approval processing rate, the user activity, the group saturation, and the group owner activity of the candidate group may be accurately calculated based on the group attribute information of the candidate group, and the group quality index may be accurately acquired based on the at least two of the examination and approval processing rate, the user activity, the group saturation, and the group owner activity.

On the basis of the embodiment as illustrated in FIG. 1, there are a plurality of implementations for acquiring a set of candidate groups to be displayed.

In an implementation, acquiring the set of candidate groups to be displayed may include: acquiring a set of groups corresponding to the group display operation as a set of candidate groups.

In the implementation, the set of candidate groups may be a set of groups corresponding to the group display operation, for example, when the group display operation is inputting a search keyword in a group search box, the set of candidate groups may be those matching the search keyword.

For another example, when the group display operation is clicking a "nearby group" button, the set of candidate groups may be all groups nearby.

For another example, when the group display operation is clicking a "group recommendation service" button, the set of candidate groups may be groups recommended by a group recommendation server.

In another implementation, acquiring a set of candidate groups to be displayed may include: acquiring a set of groups with a setup duration greater than a preset setup duration as the set of candidate groups.

In the implementation, the preset setup duration may be set based on the actual situation, for example, the preset setup duration may be 1 day. When the preset setup duration is 1 day, the set of candidate groups may be groups with a setup duration greater than 1 day, that is, the set of candidate groups does not include groups with a setup duration less than 1 day.

In another implementation, acquiring a set of candidate groups to be displayed may include: acquiring a set of groups currently set up in an application corresponding to the user account as the set of candidate groups.

In the implementation, in the application corresponding to the user account, that is, in the application where the user account is located, a combination of groups including all groups currently set up may be taken as a combination of groups.

It can be seen that, the implementation for acquiring the set of candidate groups to be displayed according to the above implementations, it is beneficial to selecting the target group from the set of candidate groups for display in the subsequent steps.

On the basis of the embodiment as illustrated in FIG. 1, there are a plurality of implementations at S 13.

In an implementation, selecting the target group from the set of candidate groups for display based on the group recommendation index may include: acquiring a candidate group with a group recommendation index greater than a preset recommendation index as a target group for display.

In some embodiments, the preset recommendation index may be set based on actual situations. It may be understood that, the greater the group recommendation index of one group, indicating the higher the group activity, and on the contrary, the smaller the group recommendation index of one group, indicating the lower the group activity. Therefore, a candidate group with the group recommendation index greater than the preset recommendation index may be displayed as a target group, and the displayed target group is thus a group with a relatively high group activity, so that the user may achieve effective social communication by means of a group after joining in a target group based on the user's own social needs, thus meeting the user's own social needs.

In another implementation, selecting the target group from the set of candidate groups for display based on the group recommendation index may include: acquiring a candidate group whose group recommendation index has a descending order within a preset descending sorting range as a target group for display.

Since the greater the group recommendation index of one group, indicating the greater the probability that the users like the group, candidate groups in the set of candidate groups may be sorted in a descending order based on the group recommendation index from large to small, and the candidate group whose group recommendation index is within the preset descending sorting range may be displayed as a target group, and the displayed target group is thus a group with a relatively high group activity, so that the user may achieve effective social communication by means of a group after joining in a target group based on the user's own social needs, thus meeting the user's own social needs.

The preset descending sorting range may be set based on the actual situations, which is not specifically limited here. For example, the preset descending sorting range may be set between 1 and 10.

In another implementation, each candidate group has a corresponding group category.

It may be understood that, each candidate group in the set of candidate groups corresponds to a group category. For example, the group category corresponding to some candidate groups is a shopping category; the group category corresponding to some candidate groups is a game category; etc..

In this case, selecting the target group from the set of candidate groups for display based on the group recommendation index may include the following steps at d1 and d2:
At d1, a sum of group recommendation indexes of candidate groups under each group category is acquired based on the group recommendation index of each candidate group as a total group recommendation index under the corresponding group category.

In some embodiments, under each group category, there may be one candidate group and there may be also a plurality of candidate groups.

When there is a candidate group under one group category, the sum of group recommendation indexes of candidate groups under each group category is a group recommendation index of the candidate group, that is, a total group recommendation index under the group category.

When there is a plurality of candidate groups under one group category, the sum of group recommendation indexes of candidate groups under the group category is a sum of group recommendation indexes of the plurality of candidate groups, that is, a total group recommendation index under the group category.

At d2, a target group category whose total group recommendation index has a descending order within a preset descending sorting range is selected, and a candidate group having the target group category is displayed as the target group.

Since the greater the total group recommendation index corresponding to one group category, the greater the group activity of the type of group, group categories may be sorted in a descending order based on the total group recommendation indexes from large to small, and a target group category whose total group recommendation index has a descending order within the preset descending sorting range may be selected.

Due to the target group category being at a top of the descending order, the group activity under the target group category is relatively high, and the candidate group having the target group category may be displayed as a target group, and the group activity of the displayed target group is thus relatively high, so that the user may achieve effective social communication by means of a group after joining in a target group based on the user's own social needs, thus meeting the user's own social needs.

As an implementation of the embodiment of the disclosure, at d2, the candidate group having the target group category is displayed as the target group, and may include the following steps at d21-d22.

At d21, a set of target groups corresponding to each target group category is displayed in sequence based on the descending order of the total group recommendation index of each target group category.

Since there may be a plurality of target group categories, the higher the total recommendation index of one target group category, indicating the higher the group activity of the target group category, a set of target groups corresponding to each target group category is displayed in sequence based on the descending order of the total group recommendation index of each target group category. In this way, the terminal may preferentially display a set of target groups under the target group category with a relatively high total group recommendation index, so that the user may preferentially see a set of target groups with a relatively high group activity.

At d22, each target group under each target group category is displayed in sequence based on the descending order of the group recommendation index.

For the plurality of target groups belonging to the same target group category, the higher the group recommendation index of one target group, indicating the higher the group activity of the target group, therefore, a target group under each target group category may be displayed based on the descending order of the group recommendation indexes. In this way, a target group with a relatively high group recommendation index may be preferentially displayed, and further the user may preferentially see a target group with a relatively high group activity, so that the user may achieve effective social communication by means of a group after joining in a target group based on the user's own social needs, thus meeting the user's own social needs.

On the basis of the embodiment as illustrated in FIG. 1, in an implementation, in order to acquire the set of candidate groups to be displayed, the terminal may trigger a server to acquire and return a set of candidate groups to be displayed by sending a group display request to the server; and/or, in order to acquire a group recommendation index of a candidate group, the terminal may trigger a server to acquire and return a corresponding group recommendation index based on the group attribute information of each candidate group in the set of candidate groups by sending an acquisition request of a group recommendation index to the server; and/or, in order to acquire a target group of a candidate group and display the target group, the terminal may trigger a server to select and return a target group from the set of candidate groups based on the group recommendation index by sending a target group acquisition request to the server.

In some embodiments, the server may return the set of candidate groups to be displayed, the group recommendation index corresponding to the candidate group and the target group to a terminal where the user account is located.

It can be seen that, in the technical solution according to the embodiment, the terminal may perform a set of candidate groups to be displayed; acquire the group recommendation index corresponding to each candidate group; or select the target group from the set of candidate groups for display based on the group recommendation index, and may further trigger the server to perform the three steps, which are reasonable. By performing the three steps by the server, it is beneficial to reducing calculation amount of the terminal, that is, the terminal only needs to display the target group in response to the group display operation triggered by the user account.

On the basis of the above embodiments, the embodiment of the disclosure further provides a method for displaying a group, which is applied to a server. The method for displaying a group may include: in response to receiving a group display request, acquiring and returning a set of candidate groups to be displayed for display of a target group; or in response to receiving an acquisition request of a group recommendation index, acquiring and returning a corresponding group recommendation index based on the group attribute information of each candidate group in the set of candidate groups, for display of a target group; or in response to receiving a target group acquisition request, selecting and returning a target group from the set of candidate groups based on the group recommendation index, for display of a target group.

In the technical solution according to the embodiment of the disclosure, in response to the group display operation triggered by the user account, the set of candidate groups to be displayed is acquired, the group recommendation index corresponding to each candidate group is acquired based on the group attribute information such as the group setup time and group flow parameters of each candidate group. During group display, the target group is selected from the set of candidate groups for display based on the group recommendation indexes. It can be seen that, in the technical solution in the embodiment of the disclosure, during group display, the terminal selects the target group having a high group activity from the set of candidate groups for display based on group recommendation indexes that may reflect the group activity, so that the user may achieve effective social communication by means of a group after joining in the target group based on the user's own social needs, thus meeting their own social needs.

In some embodiments, in response to receiving the acquisition request of the group recommendation index, acquiring the corresponding group recommendation index based on group attribute information of each candidate group in the set of candidate groups may include the following steps at e1 and e2.

At e1, in response to receiving the acquisition request of the group recommendation index, a group quality index and a flow distribution index of each candidate group are determined based on group attribute information of each candidate group in the set of candidate groups. At e2, a group recommendation index corresponding to each candidate group is determined based on the group quality index and the flow distribution index of each candidate group.

The description of the part may refer to the above description, which is not repeated in embodiments of the disclosure.

In some embodiments, the group flow parameters at least include a flow utilization index and a flow operation index of a corresponding group.

At e1, in response to receiving the acquisition request of the group recommendation index, determining the flow distribution index of each candidate group based on group attribute information of each candidate group in the set of candidate groups may include the following steps at e11-e12.

At e11, a flow support index of each candidate group is acquired based on the group setup time of each candidate group and a preset flow support parameter.

At e12, a sum of the flow utilization index, the flow operation index and the flow support index is taken as the flow distribution index.

The description of the part may refer to the above description, which is not repeated in embodiments of the disclosure.

On the basis of the above embodiment, the method for displaying a group may further include: acquiring the flow utilization index of each candidate group. Acquiring the flow utilization index of each candidate group may include: acquiring a number of applications for joining in a group and a number of group exposures received by each candidate group in a historical statistical period; and acquiring the flow utilization index based on the number of applications for joining in a group and the number of group exposures.

The description of the part may refer to the above description, which is not repeated in embodiments of the disclosure.

On the basis of the above embodiment, in response to receiving the acquisition request of the group recommendation index, determining the group quality index of each candidate group based on group attribute information of each candidate group in the set of candidate groups may include the following steps at fl-f2.

At f1, at least two of an examination and approval processing rate, a user activity, a group saturation, and a group owner activity of each candidate group are acquired based on the group attribute information of each candidate group in the set of candidate groups.

At f2, the group quality index of each candidate group is determined based on the at least two of the examination and approval processing rate, the user activity, the group saturation, and the group owner activity of each candidate group.

The description of the part may refer to the above description, which is not repeated in embodiments of the disclosure.

On the basis of the above embodiment, At f2, determining the group quality index of each candidate group based on the at least two of the examination and approval processing rate, the user activity, the group saturation, and the group owner activity of each candidate group may include the following step at f21.

At f21, the group quality index is acquired by summing up the examination and approval processing rate, the user activity, the group saturation, and the group owner activity of each candidate group processed with corresponding parameter factors.

The description of the part may refer to the above description, which is not repeated in embodiments of the disclosure.

On the basis of the above embodiment, the group attribute information further includes a number of examination and approval processing times, a number of applications for joining in a group, a number of active users, a number of text messages, a number of mutual like messages, a number of applying for joining in a group, an upper limit of a user number in a group, and whether a group owner speaks in a group.
acquiring at least two of the examination and approval processing rate, the user activity, the group saturation, and the group owner activity of each candidate group based on the group attribute information at f1 includes at least two of the following steps at f11-f14.

At f11, the examination and approval processing rate of each candidate group is acquired based on the number of examination and approval processing times and the number of applications for joining in a group for each candidate group in the set of candidate groups.

At f12, the user activity of each candidate group is acquired based on the number of active users of each candidate group, the number of text messages, and the number of mutual like messages.

At f13, the saturation of each candidate group is acquired based on the number of applications for joining in a group and the upper limit of a user number in each candidate group.

At fl4, the group activity of each candidate group is acquired based on whether an owner of each candidate group speaks in a group.

The description of the part may refer to the above description, which is not repeated in embodiments of the disclosure.

On the basis of the above embodiments, in response to receiving the group display request, acquiring the set of candidate groups to be displayed may include: acquiring a set of groups corresponding to the group display operation as the set of candidate groups; or acquiring a set of groups with a setup duration greater than a preset setup duration as the set of candidate groups; or acquiring a set of groups currently set up in an application corresponding to the user accoun as the set of candidate groups.

The description of the part may refer to the above description, which is not repeated in embodiments of the disclosure.

On the basis of the above embodiment, selecting the target group from the set of candidate groups for display based on the group recommendation index may include: acquiring a candidate group with a group recommendation index greater than a preset recommendation index as a target group; or acquiring a candidate group whose group recommendation index has a descending order within a preset descending sorting range.

The description of the part may refer to the above description, which is not repeated in embodiments of the disclosure.

On the basis of the above embodiment, each candidate group has a corresponding group category; selecting the target group from the set of candidate groups based on the group recommendation index may include: acquiring a sum of group recommendation indexes of candidate groups under each group category based on the group recommendation index of each candidate group as a total group recommendation index under the corresponding group category; and selecting a target group category whose total group recommendation index has a descending order within a preset descending sorting range, and displaying a candidate group having the target group category as the target group.

The description of the part may refer to the above description of the part, which is not repeated in embodiments of the disclosure.

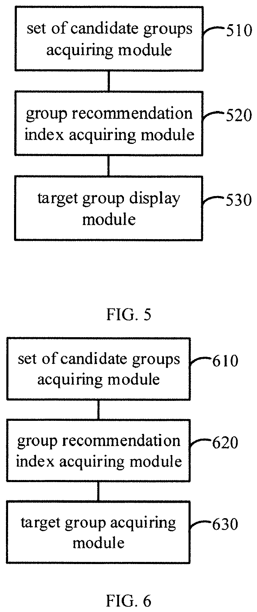

According to some embodiments of the disclosure, an apparatus for displaying a group is provided. As illustrated in FIG. 5, the apparatus may include a set of candidate groups acquiring module 510, a group recommendation index acquiring module 520 and a target group display module 530.

The set of candidate groups acquiring module 510 is configured to in response to a group display operation triggered by a user account, acquire a set of candidate groups to be displayed. The group recommendation index acquiring module 520 is configured to acquire a group recommendation index corresponding to each candidate group based on group attribute information of each candidate group in the set of candidate groups. The group attribute information at least includes group setup time and group flow parameters of the candidate group. The target group display module 530 is configured to select a target group from the set of candidate groups for display based on the group recommendation index.

In the technical solution according to the embodiment of the disclosure, in response to the group display operation triggered by the user account, the set of candidate groups to be displayed is acquired, the group recommendation index corresponding to each candidate group is acquired based on the group attribute information such as the group setup time and group flow parameters of each candidate group. During group display, a target group with a high group activity is selected from the set of candidate groups for display based on the group recommendation indexes that may reflect the group activity, so that the user may achieve effective social communication by means of a group after joining in the target group based on the user's own social needs, thus meeting their own social needs.

In some embodiments, the group recommendation index acquiring module includes a first index determining unit and a second index determining unit.

The first index determining unit is configured to determine a group quality index and a flow distribution index of each candidate group based on group attribute information of each candidate group in the set of candidate groups. The second index determining unit is configured to determine a group recommendation index corresponding to each candidate group based on the group quality index and the flow distribution index of each candidate group.

In some embodiments, the group flow parameters at least include a flow utilization index and a flow operation index of a corresponding group. The first index determining unit is specifically configured to: acquire a flow support index of each candidate group based on the group setup time of each candidate group and a preset flow support parameter; and take a sum of the flow utilization index, the flow operation index and the flow support index as the flow distribution index.

In some embodiments, the first index determining unit is further configured to acquire a flow utilization index of each candidate group, which includes: acquiring a number of applications for joining in a group and a number of group exposures received by each candidate group in a historical statistical period; and acquiring the flow utilization index based on the number of applications for joining in a group and the number of group exposures.

In some embodiments, the first index determining unit is configured to: acquire at least two of the examination and approval processing rate, the user activity, the group saturation, and the group owner activity of each candidate group based on the group attribute information of each candidate group in the set of candidate groups; and determine the group quality index of each candidate group based on the at least two of the examination and approval processing rate, the user activity, the group saturation, and the group owner activity of each candidate group.

In some embodiments, the first index determining unit is specifically configured to: acquire the group quality index by summing up the examination and approval processing rate, the user activity, the group saturation, and the group owner activity of each candidate group processed with corresponding parameter factors.

In some embodiments, the group attribute information further includes a number of examination and approval processing times, a number of applications for joining in a group, a number of active users, a number of text messages, a number of mutual like messages, a number of applications for joining in a group, an upper limit of a user number in a group, and whether a group owner speaks in a group;

The first index determining unit is specifically configured to: acquire the examination and approval processing rate of each candidate group based on the number of examination and approval processing times and the number of applications for joining in a group for each candidate group in the set of candidate groups; or acquire the user activity of each candidate group based on the number of active users, the number of text messages and the number of mutual like messages; or acquire the saturation of each candidate group based on the number of applications for joining in a group and the upper limit of a user number in each candidate group; or acquire the group activity of each candidate group based on whether an owner of each candidate group speaks in a group.

In some embodiments, the set of candidate groups acquiring module is specifically configured to: acquire a set of groups corresponding to the group display operation as the set of candidate groups; or acquire a set of groups with a setup duration greater than a preset setup duration as the set of candidate groups; or acquire a set of groups currently set up in an application corresponding to the user account as the set of candidate groups.

In some embodiments, the target group display module is specifically configured to: acquire a candidate group with a group recommendation index greater than a preset recommendation index as a target group for display; and acquire a candidate group whose group recommendation index has a descending order within a preset descending sorting range as a target group for display.

In some embodiments, each candidate group has a corresponding group category. The target group display module includes a group recommendation index acquiring unit and a target group display unit. The group recommendation index acquiring unit is configured to acquire a sum of group recommendation indexes of candidate groups under each group category based on the group recommendation index of each candidate group as a total group recommendation index under the corresponding group category; and the target group display unit is configured to select a target group category whose total group recommendation index has a descending order within a preset descending sorting range, and display a candidate group having the target group category as the target group.

In some embodiments, the target group display unit is specifically configured to: display a set of target groups corresponding to each of the target group categories in sequence based on the descending order of the total group recommendation index of each of the target group categories; and display each target group under each of the target group categories in sequence based on the descending order of the group recommendation index.

In some embodiments, the set of candidate groups acquiring module is specifically configured to trigger a server to acquire and return a set of candidate groups to be displayed by sending a group display request to the server; and/or the group recommendation index acquiring module is specifically configured to trigger a server to acquire and return a corresponding group recommendation index based on the group attribute information of each candidate group in the set of candidate groups by sending an acquisition request of a group recommendation index to the server; and/or the target group display module is configured to trigger a server to select and return a target group from the set of candidate groups based on the group recommendation index by sending a target group acquisition request to the server.

According to a fourth aspect of embodiments of the disclosure, an apparatus for displaying a group is provided. As illustrated in FIG. 6, the apparatus includes at least one of a set of candidate groups acquiring module 610, a group recommendation index acquiring module 620 and a target group acquiring module 630.

The set of candidate groups acquiring module 610 is configured to in response to receiving a group display request, acquire and return a set of candidate groups to be displayed for display of a target group; or the group recommendation index acquiring module 620 is configured to in response to receiving an acquisition request of a group recommendation index, acquire and return a corresponding group recommendation index based on the group attribute information of each candidate group in the set of candidate groups, for display of a target group; or the target group acquiring module 630 is configured to in response to receiving a target group acquisition request, select and return a target group from the set of candidate groups based on the group recommendation index, for display of a target group.

In the technical solution according to the embodiment of the disclosure, in response to a group display operation triggered by a user account, the set of candidate groups to be displayed is acquired, a group recommendation index corresponding to each candidate group is acquired based on the group attribute information such as group setup time and group flow parameters of each candidate group. During group display, the terminal selects the target group having a high group activity from the set of candidate groups for display based on the group recommendation indexes that may reflect the group activity, so that a user may achieve effective social communication by means of a group after joining in a target group based on the user's own social needs, thus meeting the user's own social needs.

In some embodiments, the group recommendation index acquiring module includes a first index determining unit and a second index determining unit.

The first index determining unit is configured to in response to receiving the acquisition request of the group recommendation index, determine a group quality index and a flow distribution index of each candidate group based on group attribute information of each candidate group in the set of candidate groups; and the second index determining unit is configured to determine a group recommendation index corresponding to each candidate group based on the group quality index and the flow distribution index of each candidate group.

In some embodiments, the group flow parameters at least include a flow utilization index and a flow operation index of a corresponding group.

The first index determining unit is configured to: acquire a flow support index of each candidate group based on the group setup time of each candidate group and a preset flow support parameter; and take a sum of the flow utilization index, the flow operation index and the flow support index as the flow distribution index.

In some embodiments, the first index determining unit is further configured to acquire a flow utilization index of each candidate group, which includes: acquiring a number of applications for joining in a group and a number of group exposures received by each candidate group in a historical statistical period; and acquiring the flow utilization index based on the number of applications for joining in a group and the number of group exposures.

In some embodiments, the first index determining unit is specifically configured to: acquire at least two of an examination and approval processing rate, a user activity, a group saturation, and a group owner activity of each candidate group based on the group attribute information of each candidate group in the set of candidate groups; and determine the group quality index of each candidate group based on the at least two of the examination and approval processing rate, the user activity, the group saturation, and the group owner activity of each candidate group.

In some embodiments, the first index determining unit is configured to: acquire the group quality index by summing up the examination and approval processing rate, the user activity, the group saturation, and the group owner activity of each candidate group processed with corresponding parameter factors.

In some embodiments, the group attribute information further includes a number of examination and approval processing times, a number of applications for joining in a group, a number of active users, a number of text messages, a number of mutual like messages, a number of applications for joining in a group, an upper limit of a user number in a group, and whether a group owner speaks in a group;

The first index determining unit is specifically configured to: acquire the examination and approval processing rate of each candidate group based on the number of examination and approval processing times and the number of applications for joining in a group for each candidate group in the set of candidate groups; or acquire the user activity of each candidate group based on the number of active users, the number of text messages and the number of mutual like messages; or acquire the saturation of each candidate group based on the number of applications for joining in a group and the upper limit of a user number in each candidate group; or acquire the group activity of each candidate group based on whether an owner of each candidate group speaks in a group.

In some embodiments, the set of candidate groups acquiring module is specifically configured to: acquire a set of groups corresponding to the group display operation as the set of candidate groups; or acquire a set of groups with a setup duration greater than a preset setup duration as the set of candidate groups; or, acquire a set of groups currently set up in an application corresponding to the user account as the set of candidate groups.

In some embodiments, the target group determining module is specifically configured to: acquire a candidate group with a group recommendation index greater than a preset recommendation index as a target group; or acquire a candidate group whose group recommendation index has a descending order within a preset descending sorting range.

In some embodiments, each candidate group has a corresponding group category; the target group determining module is configured to: acquire a sum of group recommendation indexes of candidate groups under each group category based on the group recommendation index of each candidate group as a total group recommendation index under the corresponding group category; and select a target group category whose total group recommendation index has a descending order within a preset descending sorting range, and display a candidate group having the target group category as the target group.

According to some embodiments of the disclosure, a terminal is provided and includes: a processor; and a memory configured to store instructions executable by the processor; the processor is configured to execute the instructions to implement : in response to a group display operation triggered by a user account, acquiring a set of candidate groups to be displayed; acquiring a group recommendation index corresponding to each candidate group based on group attribute information of each candidate group in the set of candidate groups; the group attribute information at least includes group setup time and a group flow parameter of the candidate group; and selecting a target group from the set of candidate groups for display based on the group recommendation index.

According to some embodiments of the disclosure, a server is provided, and includes: a processor; and a memory configured to store instructions executable by the processor; the processor is configured to execute the instructions to implement at least one of: in response to receiving a group display request, acquiring a set of candidate groups to be displayed and returning, to display a target group; or, in response to receiving an acquisition request of a group recommendation index, acquiring and returning a corresponding group recommendation index based on the group attribute information of each candidate group in the set of candidate groups, for display of a target group; or, in response to receiving a target group acquisition request, selecting and returning a target group from the set of candidate groups based on the group recommendation index, for display of the target group.

According to some embodiments of the disclosure, a system for displaying a group is provided, and includes a terminal and a server; the terminal performs: in response to a group display operation triggered by a user account, acquiring a set of candidate groups to be displayed; acquiring a group recommendation index corresponding to each candidate group based on group attribute information of each candidate group in the set of candidate groups; the group attribute information at least includes group setup time and a group flow parameter of the candidate group; and selecting a target group from the set of candidate groups for display based on the group recommendation index; the server performs at least one of: in response to receiving a group display request, acquiring and returning a set of candidate groups to be displayed for display of a target group; or in response to receiving an acquisition request of a group recommendation index, acquiring and returning a corresponding group recommendation index based on the group attribute information of each candidate group in the set of candidate group for display of a target group; or in response to receiving a target group acquisition request, selecting and returning a target group from the set of candidate groups based on the group recommendation index for display of the target group.

According to some embodiments of the disclosure, a storage medium is provided, and when instructions in the storage medium are performed by a processor of a terminal, the terminal is caused to perform: in response to a group display operation triggered by a user account, acquiring a set of candidate groups to be displayed; acquiring a group recommendation index corresponding to each candidate group based on group attribute information of each candidate group in the set of candidate groups; the group attribute information at least includes group setup time and a group flow parameter of the candidate group; and selecting a target group from the set of candidate groups for display based on the group recommendation index.

According to some embodiments of the disclosure, a storage medium is provided, and when instructions in the storage medium are performed by a processor of a server, the server is caused to perform at least one of: in response to receiving a group display request, acquiring and returning a set of candidate groups to be displayed for display of a target group; or in response to receiving an acquisition request of a group recommendation index, acquiring and returning a corresponding group recommendation index based on the group attribute information of each candidate group in the set of candidate groups for display of a target group; or in response to receiving a target group acquisition request, selecting and returning a target group from the set of candidate groups based on the group recommendation index for display of a target group.

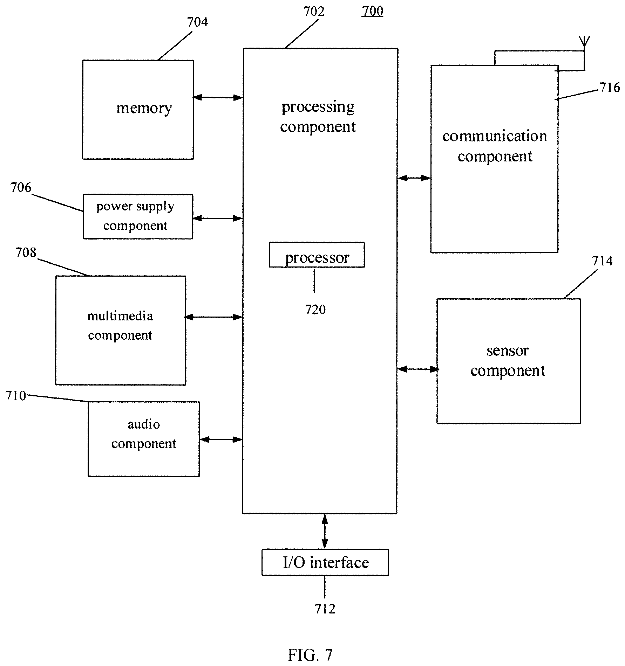

FIG. 7 is a block diagram illustrating a device 700 for displaying a group according to an exemplary embodiment. For example, the device 700 may be a mobile phone, a computer, a digital broadcast electronic device, a messaging device, a game console, a tablet device, a medical equipment, a fitness equipment, a personal digital assistant, etc.

As illustrated in FIG. 7, the device 700 may include one or more components: a processing component 702, a memory 704, a power supply component 706, a multimedia component 708, an audio component 710, an input/output (I/O) interface 712, a sensor component 714, and a communication component 716.

The processing component 702 generally controls overall operations of the device 700, such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interactions between the processing component 702 and other components. For example, the processing component 702 may include a multimedia module for convenience of the interactions between the multimedia component 708 and the processing component 702.

The memory 704 is configured to store all types of data to support operations of the device 700. Examples of such data include instructions for any applications or methods operated on the device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 706 may provide powers for all components of the device 700.

The power supply component 706 may include power supply management system, one or more power supplies, and other components related to generating, managing and distributing powers for the device 700.

The multimedia component 708 includes a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum when the device 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone (MIC) configured to receive an external audio signal when the device 700 is in an operation mode, such as a call mode, a recording mode, and a voice recognition mode. Receiving an audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but not limited to, a home button, a volume button, a starting button, and a locking button.

The sensor component 714 includes one or more sensors to provide status assessments of various aspects of the device 700. For example, the sensor component 714 may detect on/off states of the device 700 and relative positioning of the component. For example, the component is a display and a keypad of the device 700. The sensor component 714 may further detect a position change of the device 700 or one component of the device 700, a presence or absence of contacts between the user and the device 700, an orientation or acceleration or deceleration of the device 700, and a temperature change of the device 700. The sensor component 714 may include a proximity sensor configured to detect the presence of nearby objects without any physical contacts. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the device 700 and other devices. The device 700 may access a wireless network based on a communication standard, such as WiFi, an operator network (such as 2G, 3G, 4G or 5G), or a combination thereof. In an exemplary embodiment, the communication component 716 receives a broadcast signal or broadcast associated information from an external broadcast management system via a broadcast channel. In an exemplary embodiment, the communication component 716 further includes a near field communication (NFC) module to facilitate short-range communications. For example, the NFC module may be achieved based on a radio frequency identification (RFID) technology, an infrared data association (IrDA) technology, an ultra-wideband (UWB) technology, a Bluetooth (BT) technology, and other technologies.

In an exemplary embodiment, the device 700 may be achieved with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In an exemplary embodiment, there is also provided a non-transitory computer readable storage medium including instructions, such as included in the memory 704, executable by the processor 720 in the device 700, for performing the above-described methods. Optionally, for example, a storage medium may be a non-transitory computer readable storage medium. For example, the non-transitory computer readable storage medium may be a ROM, a random access memory (RAM), a CD-ROM, a magnetic tape, a floppy disk, an optical data storage device, etc.

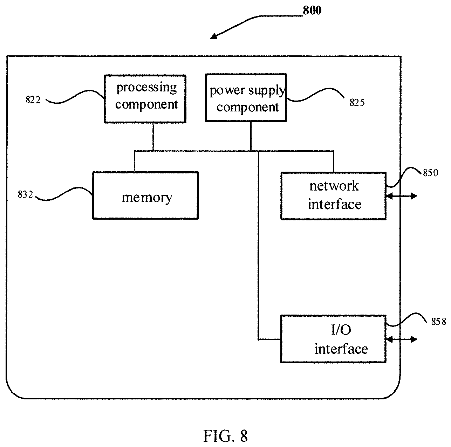

FIG. 8 is a block diagram illustrating a device 800 for displaying a group according to an exemplary embodiment. For example, the device 800 may be provided as a server. As illustrated in FIG. 8, the device 800 includes a processing component 822, and further includes one or more processors, and resources represented by a memory 832, and instructions executed by a processing component 822, for example, an application. The application stored in the memory 832 may include one or more modules, each of which corresponds to a set of instructions. In addition, the processing component 822 is configured to execute instructions to perform the method for displaying a group.

The device 800 may further include a power supply component 826 configured to perform power supply management for the device 800, a wired or wireless network interface 850 configured to connect the device 800 to a network, and an input/output (I/O) interface 858. The device 800 may be operated based on an operating system stored in a memory 832, for example, Windows ServerTM, Mac OS XTM, UnixTM, LinuxTM, FreeBSDTM.

After considering the specification and practicing the disclosure herein, those skilled in the art will easily think of other embodiments of the present disclosure. The present disclosure is intended to cover any variations, usages, or adaptive changes of the present disclosure. These variations, usages, or adaptive changes follow the general principles of the present disclosure and include common knowledge or conventional technical means in the technical field not disclosed by the present disclosure. The specification and embodiments are only be exemplary, and the true scope and spirit of the disclosure are indicated by the following claims.

It should be understood that the present disclosure is not limited to the precise structure described above and shown in the drawings, and various modifications and changes may be made without departing from its scope. The scope of the present disclosure is only limited by the appended claims.

## Claims

1. A method for displaying a group, comprising:
in response to a group display operation triggered by a user account, acquiring a set of candidate groups to be displayed;
acquiring a group recommendation index corresponding to each candidate group based on group attribute information of each candidate group in the set of candidate groups; the group attribute information at least comprises group setup time and group flow parameters of the candidate group; and
selecting a target group from the set of candidate groups for display based on the group recommendation index.

2. The method of claim 1, wherein, acquiring the group recommendation index corresponding to each candidate group based on the group attribute information of each candidate group in the set of candidate groups comprises:
determining a group quality index and a flow distribution index of each candidate group based on the group attribute information of each candidate group in the set of candidate groups; and
determining the group recommendation index corresponding to each candidate group based on the group quality index and the flow distribution index of each candidate group.

3. The method of claim 2, wherein, the group flow parameters at least comprise a flow utilization index and a flow operation index of a corresponding group;
determining the flow distribution index of each candidate group based on the group attribute information of each candidate group in the set of candidate groups comprises:
acquiring a flow support index of each candidate group based on the group setup time of each candidate group and a preset flow support parameter; and
taking a sum of the flow utilization index, the flow operation index and the flow support index as the flow distribution index.

4. The method of claim 3, wherein, the method further comprises, acquiring the flow utilization index of each candidate group, comprising:
acquiring a number of applications for joining in a group and a number of group exposures received by each candidate group in a historical statistical period; and
acquiring the flow utilization index based on the number of applications for joining in a group and the number of group exposures.

5. The method of claim 2, wherein, determining the group quality index of each candidate group based on the group attribute information of each candidate group in the set of candidate groups comprises:
acquiring at least two of an examination and approval processing rate, a user activity, a group saturation, and a group owner activity of each candidate group based on the group attribute information of each candidate group in the set of candidate groups; and
determining the group quality index of each candidate group based on the at least two of the examination and approval processing rate, the user activity, the group saturation, and the group owner activity of each candidate group.

6. The method of claim 5, wherein, determining the group quality index of each candidate group based on the at least two of the examination and approval processing rate, the user activity, the group saturation, and the group owner activity of each candidate group comprises:
acquiring the group quality index by summing up the examination and approval processing rate, the user activity, the group saturation, and the group owner activity of each candidate group processed with corresponding parameter factors.

7. The method of claim 5, wherein, the group attribute information further comprises a number of examination and approval processing times, a number of applications for joining in a group, a number of active users, a number of text messages, a number of mutual like messages, a number of applications for joining in a group, an upper limit of a user number in a group, and whether a group owner speaks in a group;
acquiring the at least two of the examination and approval processing rate, the user activity, the group saturation, and the group owner activity of each candidate group based on the group attribute information, comprises at least two of:
acquiring the examination and approval processing rate of each candidate group based on the number of examination and approval processing times and the number of applications for joining in a group for each candidate group in the set of candidate groups; or
acquiring the user activity of each candidate group based on the number of active users, the number of text messages and the number of mutual like messages; or
acquiring the saturation of each candidate group based on the number of applications for joining in a group and the upper limit of a user number in each candidate group; or
acquiring the group activity of each candidate group based on whether an owner of each candidate group speaks in a group.

8. The method of claim 1, acquiring the set of candidate groups to be displayed comprises:
acquiring a set of groups corresponding to the group display operation as the set of candidate groups; or
acquiring a set of groups with a setup duration greater than a preset setup duration as the set of candidate groups; or
acquiring a set of groups currently set up in an application corresponding to the user account as the set of candidate groups.

9. The method of claim 1, wherein selecting the target group from the set of candidate groups for display based on the group recommendation index comprises:
acquiring a candidate group with a group recommendation index greater than a preset recommendation index as a target group for display; or
acquiring a candidate group whose group recommendation index has a descending order within a preset descending sorting range as a target group for display.

10. The method of claim 1, wherein, each candidate group has a corresponding group category; selecting the target group from the set of candidate groups for display based on the group recommendation index comprises:
acquiring a sum of group recommendation indexes of candidate groups under each group category based on the group recommendation index of each candidate group as a total group recommendation index under the corresponding group category; and
selecting a target group category whose total group recommendation index has a descending order within a preset descending sorting range, and displaying a candidate group having the target group category as the target group.

11. The method of claim 10, wherein, displaying the candidate group having the target group category as the target group comprises:
displaying a set of target groups corresponding to each target group category in sequence based on the descending order of the total group recommendation index of each target group category; and
displaying each target group under each target group category in sequence based on the descending order of the group recommendation index.

12. The method of claim 1, wherein,
triggering a server to acquire and return a set of candidate groups to be displayed by sending a group display request to the server; and/or
triggering a server to acquire and return a corresponding group recommendation index based on the group attribute information of each candidate group in the set of candidate groups by sending an acquisition request of a group recommendation index to the server; and/or
triggering a server to select and return a target group from the set of candidate groups based on the group recommendation index by sending a target group acquisition request to the server.

13. A method for displaying a group, comprising at least one of:
in response to receiving a group display request, acquiring and returning a set of candidate groups to be displayed for display of a target group; or
in response to receiving an acquisition request of a group recommendation index, acquiring and returning a corresponding group recommendation index based on group attribute information of each candidate group in the set of candidate groups, for display of a target group; or
in response to receiving a target group acquisition request, selecting and returning a target group from the set of candidate groups based on the group recommendation index, for display of a target group.

14. The method of claim 13, wherein, in response to receiving the acquisition request of the group recommendation index, acquiring the corresponding group recommendation index based on the group attribute information of each candidate group in the set of candidate groups comprises:
in response to receiving the acquisition request of the group recommendation index, determining a group quality index and a flow distribution index of each candidate group based on the group attribute information of each candidate group in the set of candidate groups; and
determining the group recommendation index corresponding to each candidate group based on the group quality index and the flow distribution index of each candidate group.

15. The method of claim 14, wherein, the group flow parameters at least comprise a flow utilization index and a flow operation index of a corresponding group;
in response to receiving the acquisition request of the group recommendation index, determining the flow distribution index of each candidate group based on the group attribute information of each candidate group in the set of candidate groups comprises:
acquiring a flow support index of each candidate group based on the group setup time of each candidate group and a preset flow support parameter; and
taking a sum of the flow utilization index, the flow operation index and the flow support index as the flow distribution index.

16. The method of claim 15, wherein, the method further comprises acquiring the flow utilization index of each candidate group, comprising:
acquiring a number of applications for joining in a group and a number of group exposures received by each candidate group in a historical statistical period; and
acquiring the flow utilization index based on the number of applications for joining in a group and the number of group exposures.

17. The method of claim 14, wherein, in response to receiving the acquisition request of the group recommendation index, determining the group quality index of each candidate group based on the group attribute information of each candidate group in the set of candidate groups comprises:
acquiring at least two of an examination and approval processing rate, a user activity, a group saturation, and a group owner activity of each candidate group based on the group attribute information of each candidate group in the set of candidate groups; and
determining the group quality index of each candidate group based on the at least two of the examination and approval processing rate, the user activity, the group saturation, and the group owner activity of each candidate group.

18. The method of claim 17, wherein, determining the group quality index of each candidate group based on the at least two of the examination and approval processing rate, the user activity, the group saturation, and the group owner activity of each candidate group comprises:
acquiring the group quality index by summing up the examination and approval processing rate, the user activity, the group saturation, and the group owner activity of each candidate group processed with corresponding parameter factors.

19. The method of claim 18, wherein, the group attribute information further comprises a number of examination and approval processing times, a number of applications for joining in a group, a number of active users, a number of text messages, a number of mutual like messages, a number of applying for joining in a group, an upper limit of a user number in a group, and whether a group owner speaks in a group;
acquiring the at least two of the examination and approval processing rate, the user activity, the group saturation, and the group owner activity of each candidate group based on the group attribute information comprises:
acquiring the examination and approval processing rate of each candidate group based on the number of examination and approval processing times and the number of applications for joining in a group for each candidate group in the set of candidate groups; or
acquiring the user activity of each candidate group based on the number of active users, the number of text messages and the number of mutual like messages; or
acquiring the saturation of each candidate group based on the number of applications for joining in a group and the upper limit of a user number in each candidate group; or
acquiring the group activity of each candidate group based on whether an owner of each candidate group speaks in a group.

20. The method of claim 13, wherein, acquiring the set of candidate groups to be displayed in response to receiving the group display request comprises:
acquiring a set of groups corresponding to the group display operation as the set of candidate groups; or
acquiring a set of groups with a setup duration greater than a preset setup duration as the set of candidate groups; or
acquiring a set of groups currently set up in an application corresponding to the user account as the set of candidate groups.

21. The method of claim 13, wherein, selecting the target group from the set of candidate groups based on the group recommendation index comprises:
acquiring a candidate group with a group recommendation index greater than a preset recommendation index as a target group; or
acquiring a candidate group whose group recommendation index has a descending order within a preset descending sorting range as a target group for display.

22. The method of claim 13, wherein, each candidate group has a corresponding group category;
selecting the target group from the set of candidate groups based on the group recommendation index comprises:
acquiring a sum of group recommendation indexes of candidate groups under each group category based on the group recommendation index of each candidate group as a total group recommendation index under the corresponding group category; and
selecting a target group category whose total group recommendation index has a descending order within a preset descending sorting range, and displaying a candidate group having the target group category as the target group.

23. An apparatus for displaying a group, comprising:
a set of candidate groups acquiring module, configured to in response to a group display operation triggered by a user account, acquire a set of candidate groups to be displayed;
a group recommendation index acquiring module, configured to acquire a group recommendation index corresponding to each candidate group based on group attribute information of each candidate group in the set of candidate groups; the group attribute information at least comprises group setup time and group flow parameters of the candidate group; and
a target group display module, configured to select a target group from the set of candidate groups for display based on the group recommendation index.

24. An apparatus for displaying a group, comprising at least one of:
a set of candidate groups acquiring module, configured to in response to receiving a group display request, acquire and return a set of candidate groups to be displayed for display of a target group; or
a group recommendation index acquiring module, configured to in response to receiving an acquisition request of a group recommendation index, acquire and return a corresponding group recommendation index based on group attribute information of each candidate group in the set of candidate groups, for display of a target group; or
a target group acquiring module, configured to in response to receiving a target group acquisition request, select and return a target group from the set of candidate groups based on the group recommendation index, for display of the target group.

25. A terminal, comprising:
a processor; and
a memory configured to store instructions executable by the processor;
wherein, the processor is configured to execute the instructions to implement:
in response to a group display operation triggered by a user account, acquiring a set of candidate groups to be displayed;
acquiring a group recommendation index corresponding to each candidate group based on group attribute information of each candidate group in the set of candidate groups; the group attribute information at least comprises group setup time and group flow parameters of the candidate group; and
selecting a target group from the set of candidate groups for display based on the group recommendation index.

26. A server, comprising:
a processor; and
a memory configured to store instructions executable by the processor;
wherein, the processor is configured to execute the instructions to implement at least one of:
in response to receiving a group display request, acquiring and returning a set of candidate groups to be displayed for display of a target group; or
in response to receiving an acquisition request of a group recommendation index, acquiring and returning a corresponding group recommendation index based on group attribute information of each candidate group in the set of candidate groups, for display of a target group; or
in response to receiving a target group acquisition request, selecting and returning a target group from the set of candidate groups based on the group recommendation index, for display of a target group.

27. A system for displaying a group, comprising a terminal and a server;
the terminal is configured to perform:
in response to a group display operation triggered by a user account, acquiring a set of candidate groups to be displayed;
acquiring a group recommendation index corresponding to each candidate group based on group attribute information of each candidate group in the set of candidate groups; the group attribute information at least comprises group setup time and group flow parameters of the candidate group; and
selecting a target group from the set of candidate groups for display based on the group recommendation index;
the server is configured to perform at least one of:
in response to receiving a group display request, acquiring and returning a set of candidate groups to be displayed for display of a target group; or
in response to receiving an acquisition request of a group recommendation index, acquiring and returning a corresponding group recommendation index based on the group attribute information of each candidate group in the set of candidate groups, for display of a target group; or
in response to receiving a target group acquisition request, selecting and returning a target group from the set of candidate groups based on the group recommendation index, for display of a target group.

28. A storage medium, when instructions in the storage medium are performed by a processor of a terminal, the terminal is caused to perform:
in response to a group display operation triggered by a user account, acquiring a set of candidate groups to be displayed;
acquiring a group recommendation index corresponding to each candidate group based on group attribute information of each candidate group in the set of candidate groups; the group attribute information at least comprises group setup time and group flow parameters of the candidate group; and
selecting a target group from the set of candidate groups for display based on the group recommendation index.

29. A storage medium, when instructions in the storage medium are performed by a processor of a server, the server is caused to perform at least one of:
in response to receiving a group display request, acquiring and returning a set of candidate groups to be displayed for display of a target group; or
in response to receiving an acquisition request of a group recommendation index, acquiring and returning a corresponding group recommendation index based on group attribute information of each candidate group in the set of candidate groups, for display of a target group; or
in response to receiving a target group acquisition request, selecting and returning a target group from the set of candidate groups based on the group recommendation index, for display of a target group.
